(19) **Europäisches Patentamt**
**European Patent Office**
**Office européen des brevets**

(11) **EP 4 715 743 A1**

(12) **EUROPEAN PATENT APPLICATION**
published in accordance with Art. 153(4) EPC

(43) Date of publication:
25.03.2026 Bulletin 2026/13

(51) International Patent Classification (IPC):
*G06T 7/55* (2017.01)      *G01C 7/02* (2006.01)
*G06T 7/64* (2017.01)

(21) Application number: 24806818.1

(22) Date of filing: 19.01.2024

(52) Cooperative Patent Classification (CPC):
G06V 20/17; G01C 7/02; G06T 7/55; G06T 7/64;
G06V 10/62; G06V 10/7715; G06V 20/56;
G06V 20/588; G06V 20/647

(86) International application number:
PCT/JP2024/001420

(87) International publication number:
WO 2024/236863 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.05.2023 JP 2023080856

(71) Applicants:
• The University of Tokyo
Bunkyo-ku, Tokyo 113-8654 (JP)
• Smartcity Research Institute Co.Ltd
Tokyo 113-0023 (JP)
• Nichireki Group Co., Ltd.
Tokyo 102-8222 (JP)

(72) Inventors:
• NAGAYAMA, Tomonori
Tokyo 113-8654 (JP)
• GAO, Wenchao
Tokyo 113-8654 (JP)
• XUE, Kai
Tokyo 113-0023 (JP)
• ZHAO, Boyu
Tokyo 113-0023 (JP)
• NAKA, Michihiro
Koshigaya-shi, Saitama 343-0824 (JP)

(74) Representative: Meissner Bolte Partnerschaft
mbB
Patentanwälte Rechtsanwälte
Postfach 86 06 24
81633 München (DE)

(54) **THREE-DIMENSIONAL ROAD SURFACE SHAPE ESTIMATION DEVICE,**
**THREE-DIMENSIONAL ROAD SURFACE SHAPE ESTIMATION METHOD,**
**THREE-DIMENSIONAL ROAD SURFACE SHAPE ESTIMATION SYSTEM, AND**
**THREE-DIMENSIONAL ROAD SURFACE SHAPE ESTIMATION PROGRAM**

(57)      The present disclosure provides a road surface shape estimation device and the like, which are capable of easily and accurately estimating a three-dimensional shape of a road surface. The road surface shape estimation device of the present disclosure includes an identification unit that compares a first birds-eye view obtained by converting a first image of a road surface, captured from a first position, into a birds-eye view with a second birds-eye view obtained by converting a second image of the road surface, captured from a second position different from the first position, into a birds-eye view and identifies, for each of a plurality of portions of the road surface, a first portion in the first birds-eye view corresponding to the portion and a second portion in the second birds-eye view corresponding to the portion and an estimation unit that calculates an amount of movement between the first portion and the second portion over the images and estimates an uneven shape of the road surface on the basis of the amount of movement.

EP 4 715 743 A1

[Figure 1]

## Description

### Technical Field

The present disclosure relates to a road surface three-dimensional shape estimation device, a road surface three-dimensional shape estimation method, a road surface three-dimensional shape estimation system, and a road surface three-dimensional shape estimation program.

### Background Art

In recent years, various inspection items and methods have been proposed for the purpose of detecting road defects and developing methods for appropriate maintenance and management of roads. With regard to road surface inspection items, a crack rate and a rutting depth have been set as important indices for determining road surface repairs by the Ministry of Land, Infrastructure, Transport and Tourism in Japan.

As examples of a method of estimating a three-dimensional shape of a road surface (hereinafter referred to also as the "road surface shape"), a method of estimating a longitudinal profile of a road surface by disposing a sensor, such as an acceleration sensor, in a vehicle running on the road surface, a method of estimating an uneven shape of a road surface by using a MMS (Mobile Mapping System) with a laser scanner mounted therein, and a method of estimating an uneven shape of a road surface from a plurality of images with different viewpoints, such as Structure from motion (SfM), can be considered.

For example, Patent Literature 1 discloses a method of estimating a longitudinal profile of a road surface, on which a vehicle is grounded, on the basis of an acceleration in a direction perpendicular to the road surface, an angular velocity with respect to a pitch axis, or the like.

### Citation List

#### Patent Literature

Patent Literature 1: Patent Publication JP-A-2018-185276

### Summary of Invention

The present inventors have found various issues in existing road surface shape estimation methods. For example, a road surface shape estimation method using the SfM involves a large amount of calculation for building a three-dimensional model, and it is difficult for the method to estimate a road surface shape highly accurately. In addition, since the method requires road surface images from a large number of viewpoints, the method tends to require a long period to estimate the road surface shape.

It is therefore an object of the present invention to provide a road surface shape estimation device and the like, which are capable of easily and accurately estimating a three-dimensional shape of a road surface.

An aspect of the present invention provides a road surface shape estimation device including: an identification unit that compares a first birds-eye view obtained by converting a first image of a road surface, captured from a first position, into a birds-eye view with a second birds-eye view obtained by converting a second image of the road surface, captured from a second position different from the first position, into a birds-eye view and identifies, for each of a plurality of portions of the road surface, a first portion in the first birds-eye view corresponding to the portion and a second portion in the second birds-eye view corresponding to the portion; and an estimation unit that calculates an amount of movement between the first portion and the second portion over the images and estimates an uneven shape of the road surface on the basis of the amount of movement.

According to this aspect, by utilizing partial distortion of the images converted into the birds-eye views when the road surface has unevenness and comparing degrees of the distortion, due to birds-eye view conversion, of the pair of images captured from the different viewpoints with each other, it is possible to accurately estimate the uneven shape of the road surface only from the two images.

In the aspect described above, it is preferable that the identification unit matches the first birds-eye view with the second birds-eye view to identify the first and second portions. It may be possible that the identification unit matches respective feature points in the first and second birds-eye views or matches all pixels, included in at least a portion of a region of each of the first and second birds-eye views, to perform the identification. According to this aspect, it is possible to identify, for each of a large number of points on the road surface, the first portion in the first birds-eye view and the second portion in the second birds-eye view, and increase accuracy of the estimation of the road surface shape.

In the aspect described above, it is preferable that the identification unit performs the matching for each of a plurality of regions each having a predetermined size in each of the first and second birds-eye views, the plurality of regions having at least respective portions overlapping adjacent regions.

It is also preferable that the identification unit further matches first and second conversion diagrams obtained by subjecting the first and second birds-eye views to homographic conversion to identify the first and second portions.

It is also preferable that the identification unit further uses a supervised learning model to perform the matching and training data for the learning model includes at least one of a combination of an image of the road surface and a degraded image corresponding thereto and a combination of two images having respective regions overlapping each other in which respective all pixels are associated with each other.

According to these aspects, it is possible to identify, for each of the large number of points on the road surface, the first portion in the first birds-eye view and the second portion in the second birds-eye view and increase the accuracy of the road surface shape estimation.

In the aspect described above, it is preferable that the combination of the image of the road surface and the degraded image corresponding thereto is a combination of the image of the road surface and an image including a portion obtained by adding blur to at least one portion of the image of the road surface.

It is also preferable that the combination of the two images having the respective regions overlapping each other in which the respective all pixels are associated with each other is a combination of two images generated by a method including matching feature points in a pair of images including respective overlapping regions so as to match a plurality of feature points, projectively transforming at least one of the pair of images such that at least some of the plurality of feature points overlap each other in the pair of images, and correspondingly associating, in the overlapping regions of the pair of images, at least one of which has been projectively transformed, pixels overlapping with each other among pixels other than the plurality of matched feature points.

According to these aspects, it is possible to more easily and highly accurately identify, for each of the large number of points on the road surface, the first portion in the first birds-eye view and the second portion in the second birds-eye view and increase the accuracy of the road surface shape estimation.

In the aspect described above, it may be possible that each of the first and second images is an image or a frame of a video captured by an imaging unit disposed in a vehicle running on the road surface, the identification unit identifies the first and second portions, for each of the plurality of portions of the road surface having different positions at least in a direction substantially perpendicular to a running direction of the vehicle, and the estimation unit estimates an uneven shape in the direction substantially perpendicular to the running direction of the vehicle. According to this aspect, it is possible to appropriately estimate a rutting shape on the road surface.

In the aspect described above, it is preferable that the identification unit further identifies the first and second portions, for each of the plurality of portions of the road surface having the same position in the direction substantially perpendicular to the running direction of the vehicle, and the estimation unit further calculates, for the plurality of portions of the road surface having the same position in the direction substantially perpendicular to the running direction of the vehicle, an average value of component in the running direction of the calculated amounts of movement. According to this aspect, it is possible to more accurately estimate the rutting shape on the road surface.

In the aspect described above, it may be possible that the uneven shape includes at least one of a rutting and a pothole.

In the aspect described above, it may be possible that the estimation unit uses an estimation result for a road surface or an object having an uneven shape of a known dimension as reference data to further calculate a dimension of the estimated uneven shape on the road surface. According to this aspect, it is also possible to estimate an actual dimension of the estimated uneven shape.

Another aspect of the present invention provides a method of estimating a road surface shape by using the road surface shape estimation device according to the above aspect and a program for causing a computer to function as the road surface shape estimation device.

Still another aspect of the present invention provides a road surface shape estimation system including: an imaging unit disposed in a vehicle; an identification unit that compares a first birds-eye view obtained by converting a first image of a road surface, captured by the imaging unit from a first position, into a birds-eye view with a second birds-eye view obtained by converting a second image of the road surface, captured by the imaging unit from a second position different from the first position, into a birds-eye view and identifies, for each of a plurality of portions of the road surface, a first portion in the first birds-eye view corresponding to the portion and a second portion in the second birds-eye view corresponding to the portion; and an estimation unit that calculates an amount of movement between the first portion and the second portion over the images and estimates an uneven shape of the road surface on the basis of the amount of movement.

**Advantageous Effect of Invention**

The present invention provides a road surface shape estimation device capable of easily and accurately estimating a three-dimensional shape of a road surface and the like.

**Brief Description of Drawings**

[Figure 1] Figure 1 is a schematic view of a road surface shape estimation system according to the present embodiment.

[Figure 2] Figure 2 is a functional block diagram of a road surface shape estimation device according to the present embodiment.

[Figure 3] Figure 3 is a diagram illustrating a physical configuration of the road surface shape estimation device according to the present embodiment.

[Figure 4] Figure 4 is a flow chart of processing in the road surface shape estimation system according to the present embodiment.

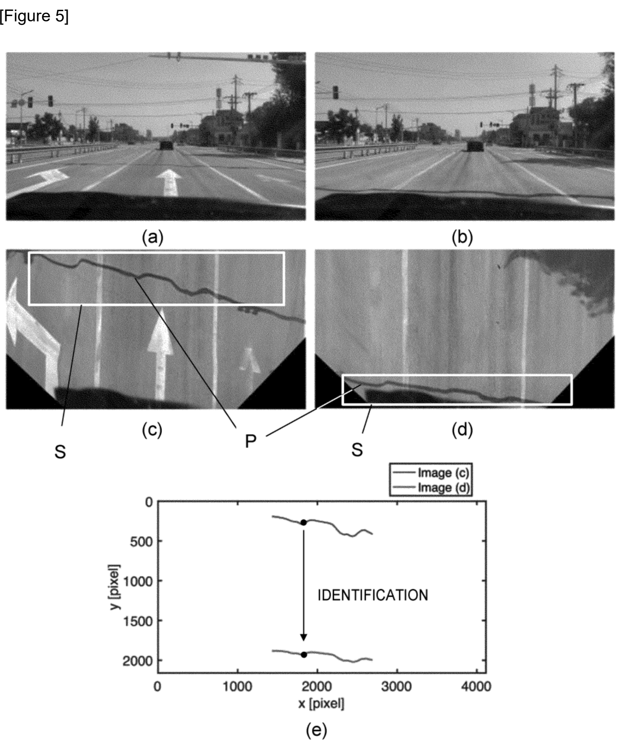

[Figure 5] Figure 5 illustrates an example of images acquired and converted in the road surface shape estimation system according to the present embodiment, in which Figure 5(a) illustrates a first image captured from a first position, Figure 5(b) illustrates a second image captured from a second position, Figure 5(c) illustrates a first birds-eye view obtained by subjecting the first image to birds-eye view conversion, Figure 5(d) illustrates a second birds-eye view obtained by subjecting the second image to the birds-eye view conversion, regions S enclosed in rectangles in Figures 5(c) and 5(d) represent overlapping regions in the first birds-eye view and the second birds-eye view, and Figure 5(e) is a graph representing a position of a shadow P of a linear structure included in each of the regions S in Figures 5(c) and 5(d) as two-dimensional coordinates.

[Figure 6] Figure 6 is a schematic view of estimation in an estimation unit of the road surface shape estimation device according to the present embodiment.

[Figure 7] Figure 7 is a flow chart of processing in which the road surface shape estimation system according to the present embodiment estimates a rutting shape on the road surface.

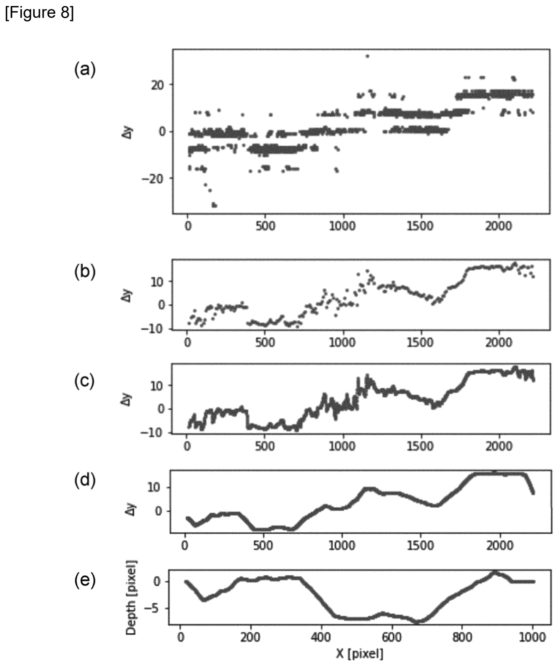

[Figure 8] Figure 8 is a graph showing an example of an output when the rutting shape is estimated by the road surface shape estimation system according to the present embodiment, in which Figure 8(a) is a graph obtained by plotting, for each of a plurality of points which are included in a predetermined region and for which a first portion and a second portion have been identified, an x-coordinate on an image and a y-axis-direction component $\Delta y$ of an amount of movement from the first portion to the second portion, Figure 8(b) is a graph obtained by calculating an average value of $\Delta y$ at individual points having the same x-coordinate on the graph in Figure 8(a),

Figure 8(c) is graph obtained by serializing the graph in Figure 8(b), Figure 8(d) is graph obtained by smoothing the graph in Figure 8(c), and Figure 8(e) is a graph obtained by converting the graph in Figure 8(d) to a depth of the rutting.

[Figure 9] Figure 9 is a diagram illustrating an example of the estimation of the three-dimensional shape performed by the road surface shape estimation system according to the present embodiment, in which Figure 9(a) is a diagram illustrating an example in which, when the three-dimensional shape is estimated, the estimation is performed by dividing a region into a plurality of regions, and Figures 9(b) and 9(c) are diagrams respectively illustrating three-dimensional shapes of the rutting and a pothole estimated by the road surface shape estimation system according to the present embodiment.

**Description of Embodiments**

Referring to the accompanying drawings, a description will be given of an embodiment of the present invention. Note that, in individual figures, those given the same reference signs have the same or similar configurations.

[Road Surface Shape Estimation System]

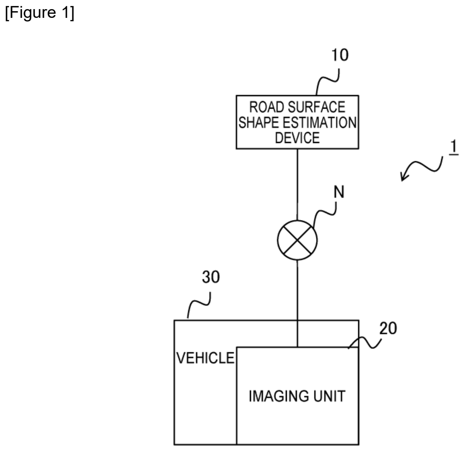

Figure 1 is a diagram illustrating an overview of a configuration of a road surface shape estimation system 1 according to the present embodiment. The road surface shape estimation system 1 includes a vehicle 30, an imaging unit 20 disposed in the vehicle 30, and a road surface shape estimation device 10. In the road surface shape estimation system 1, the imaging unit 20 in the vehicle 30 takes a video or a photograph of a road surface. The road surface shape estimation device 10 extracts one or more pairs of images from the video or photograph taken by the imaging unit 20, and estimates a three-dimensional shape of the road surface on the basis of the pair of images. The road surface shape estimation device 10 converts the pair of images to birds-eye views, and compares the pair of birds-eye views with each other. The road surface shape estimation device 10 utilizes a phenomenon such that, when the road surface has unevenness, the images converted to the birds-eye views are partially distorted to estimate the three-dimensional shape of the road surface by comparing degrees of the distortion of the pair of images captured from different viewpoints due to birds-eye view conversion.

In other words, the road surface shape estimation system 1 includes the imaging unit 20 disposed in the vehicle 30 and the road surface shape estimation device 10 that compares a first birds-eye view obtained by converting a first image of the road surface captured by the imaging unit 20 from a first position with a second birds-eye view obtained by converting a second image of the road surface captured by the imaging unit 20 from a second position different from the first position to identify, for each of a plurality of portions of the road surface, a first portion in the first birds-eye view and a second portion in the second birds-eye view that correspond to the portion, calculates an amount of movement between the first portion and the second portion over the images, and estimates an uneven shape of the road surface on the basis of the amount of movement.

In the road surface shape estimation system 1, the road surface shape estimation device 10 is connected to the imaging unit 20 via a communication network N. The communication network N mentioned herein may be a wired or wireless communication network. Note that the road surface shape estimation device 10 need not necessarily be a device independent of the imaging unit 20, and may also be configured integrally with the imaging unit 20. In that case, it may also be possible that, through execution of a road surface estimation program installed in an information processing terminal including the imaging unit 20, the information processing terminal functions as the road surface shape estimation device 10.

The imaging unit 20 is not particularly limited as long as the imaging unit 20 is configured to be able to capture a video or an image. The imaging unit 20 may be, e.g., a camera or a versatile information processing terminal such as a smartphone or a tablet.

The imaging unit 20 is fixedly disposed in the vehicle 30. In other words, the imaging unit 20 moves correspondingly to movement of the vehicle 30. In the estimation in the road surface shape estimation device 10, the imaging unit 20 need not necessarily be disposed in the vehicle but, in the present description, a description will be given of a case where the imaging unit 20 is disposed in the vehicle 30 and the imaging unit 20 is moved with the movement of the vehicle 30. Note that, in a case where the imaging unit 20 is not disposed in the vehicle, the imaging unit 20 is preferably held by a holder having a mechanism capable of moving the imaging unit 20, while keeping a height thereof constant from the road surface. This can increase accuracy of the estimation by the road surface shape estimation device 10.

The imaging unit 20 may also be disposed in any portion of the vehicle 30 as long as a position thereof allows the imaging unit 20 to image the road surface. For example, the imaging unit 20 may be set on a front side or a rear side of the vehicle 30 in a running direction thereof, and may be disposed on a dashboard, a windshield, a back mirror, or the like of the vehicle 30 to image the road surface ahead in the running direction. The imaging unit 20 may acquire an image ahead of or behind the vehicle 30 in the running direction thereof. The first position from which the first image is to be captured, the second position from which the second image is to be captured, and the road surface to be imaged may be in substantially the same line.

The imaging unit 20 images the road surface as an object a three-dimensional shape of which is to be estimated to acquire a video or an image of the road surface. When acquiring the image, the imaging unit 20 acquires at least two images each including the same location within the road surface in an image range. When acquiring the video, the imaging unit 20 acquires the video such that at least two frames including the same location within the road surface in an imaging range are included in the video. In the present description, the frame in the video and a still image are comprehensively referred to as "images", unless otherwise particularly mentioned. Accordingly, the imaging unit 20 acquires a pair of images with overlapping imaging ranges. In other words, each of the pair of images acquired by the imaging unit 20 includes a predetermined range within the road surface, and the road surface shape estimation device 10 estimates a three-dimensional shape in the range within the road surface that is included in each of the pair of images.

The imaging unit 20 is disposed in the vehicle 30 to image the road surface, while the vehicle 30 is running. Thus, the first image resulting from the imaging of the road surface from the first position and the second image resulting from the imaging of the road surface from the second position are obtained. It is to be noted herein that respective heights of the first position and the second position from the road surface are substantially equal. By adjusting a running speed of the vehicle 30 and an interval of image acquisition by the imaging unit 20 (which is a frame rate when the video is to be acquired or a continuous imaging speed when the image is to be acquired), it is possible to freely change the range of the overlapping portions in the first image and the second image.

The first position from which the first image is to be acquired and the second position from which the second image is to be acquired are, e.g., at an interval of several meters, an interval of 0.5 to 10 meters, or an interval of 1 to 5 meters. The road surface shape estimation system 1 may also acquire position information of the vehicle 30 and the imaging unit 20 from the information processing terminal disposed in the vehicle 30 on the basis of a global navigation satellite system (GNSS) and select a pair of images acquired at an appropriate interval from a plurality of the images acquired by the imaging unit 20 on the basis of the position information. Either the information processing terminal disposed in the vehicle 30 or the road surface shape estimation device 10 may have a function of selecting the images. The information processing terminal disposed in the vehicle 30 may also function as the imaging unit 20.

The vehicle 30 may be an automobile that runs with four tires on the road surface. Alternatively, the vehicle 30 may also have three wheels, two wheels, or five or more wheels. As the vehicle 30, an automobile of any size may be used.

(Road Surface Shape Estimation Device)

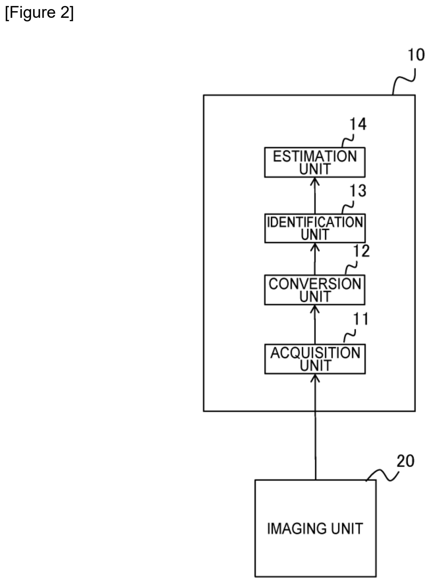

Figure 2 is a functional block diagram of the road surface shape estimation device 10. The road surface shape estimation device 10 includes an acquisition unit 11, a conversion unit 12, an identification unit 13, and an estimation unit 14. Note that, in the present embodiment, a description will be given by using a mode in which, in the road surface shape estimation device 10, the acquisition unit 11 acquires the images from the imaging unit 20 and the conversion unit 12 converts the images as an example but, for instance, the information processing terminal having a function of the imaging unit 20 may also have a function of the conversion unit 12. In this case, the acquisition unit 11 of the road surface shape estimation device 10 acquires, by the information processing terminal including the imaging unit 20, birds-eye views resulting from acquisition of the images and further birds-eye view conversion thereof. When the information processing terminal including the imaging unit 20 has the function of the road surface shape estimation device 10 as described above, the information processing terminal needs only to include the imaging unit 20, the conversion unit 12, the identification unit 13, and the estimation unit 14.

The acquisition unit 11 acquires the two or more images acquired by the imaging unit 20 by imaging the road surface. The acquisition unit 11 may be implemented by a communication unit 10d described later. The acquisition unit 11 may acquire all of the plurality of images captured by the imaging unit 20, or may also acquire only any of the images.

The acquisition unit 11 acquires at least one pair of images with the overlapping imaging ranges. An overlapping portion may be 20% or more, 30% or more, 40% or more, 50% or more, or 60% or more of each of the acquired pair of images, and may be 90% or less, 80% or less, or 70% or less thereof.

The conversion unit 12 converts the plurality of images acquired by the acquisition unit 11 to the birds-eye views. The conversion unit 12 may be implemented by an image conversion program stored in a RAM 10b or a ROM 10c described later and executed by a CPU 10a. The conversion unit 12 may convert all of the plurality of images acquired by the acquisition unit 11, or may also convert any of the images.

The imaging unit 20 is disposed in the vehicle 30 to image the road surface. Consequently, each of the images captured by the imaging unit 20 and acquired by the acquisition unit 11 is an image of the road surface captured diagonally from above the road surface. The conversion unit 12 converts the image captured diagonally from above the road surface to such an image as obtained by imaging the road surface directly from above the road surface. A conversion means is not particularly limited, and a specific example thereof will be described later. The conversion unit 12 performs the birds-eye view conversion on the pair of images with the overlapping imaging range.

The identification unit 13 compares the pair of birds-eye views with the overlapping imaging ranges with each other, which are among the plurality of birds-eye views resulting from the conversion by the conversion unit 12, and identifies, for each of a plurality of portions of the road surface, a first portion in the first birds-eye view and a second portion in the second birds-eye view that correspond to the portion. In other words, the identification unit 13 identifies, for each of a plurality of portions or points in the first birds-eye view, the portion or point in the second birds-eye view that corresponds thereto. The identification unit 13 identifies a plurality of the first portions and a plurality of the second portions respectively corresponding thereto. The identification unit 13 may be implemented by an input unit 10e described later or by a program stored in the RAM 10b or the ROM 10c described later and executed by the CPU 10a.

The portions in the birds-eye views identified by the identification unit 13 may be portions each made of 1 pixel or made of a plurality of pixels in the birds-eye view. The plurality of pixels may be, e.g., 2 to 16 pixels. The identification unit 13 identifies the first portion and the second portion for each of the plurality of portions of the road surface, and the plurality of portions may be adjacent to or apart from each other. For example, each of the portions for which the first portion and the second portion are to be identified may be a feature point in each of the first and second birds-eye views, or may also be a structure, a shadow, or the like on the road surface specified by a user.

The identification by the identification unit 13 may be executed by the user of the road surface shape estimation device 10, or may also be executed by an algorithm programmed so as to identify the corresponding locations in the pair of images. In a case where the user identifies the first portion and the second portion, the user needs only to compare the first birds-eye view with the second birds-eye view and specify a feature portion on the road surface, such as a lane, a manhole, or a shadow, in each of the first birds-eye view and the second birds-eye view. In a case of identifying the first portion and the second portion by using the algorithm, an image matching technique can be used. A specific example thereof will be described later.

The estimation unit 14 calculates, for each of a plurality of combinations of the first portions and the second portions identified by the identification unit 13, the amount of movement from the first portion to the second portion over the images, and estimates an uneven shape of the road surface on the basis of the amount of movement. Details thereof will be described later and, when the images of the road surfaces are subjected to the birds-eye view conversion in a case where the road surface has unevenness, the birds-eye views are distorted according to the positions from which the images were acquired and the uneven shape of the road surface. The estimation unit 14 quantifies the distortion by calculating the amount of movement from the first portion to the second portion over the images, and quantitatively estimates the uneven shape of the road surface on the basis of the amount of movement. The estimation unit 14 may be implemented by a program stored in the RAM 10b or ROM 10c described later and executed by the CPU 10a.

The estimation unit 14 can estimate the three-dimensional shape of the road surface, but need not necessarily estimate the three-dimensional shape. For example, the estimation unit 14 may also estimate a cross-sectional shape of the road surface in a predetermined direction. The estimation unit 14 may also estimate a transverse profile of the road surface, i.e., a cross-sectional shape of the road surface in a transverse direction (direction substantially perpendicular to the running direction of the vehicle) of the road surface. The estimation unit 14 may estimate at least one of, e.g., a rutting and a pothole of the road surface.

The road surface shape estimation device 10 may also output the uneven shape of the road surface estimated by the estimation unit 14 in an appropriate format. For example, the road surface shape estimation device 10 may also display an estimation result on a display unit 10f described later or transmit the estimation result to another terminal via the communication unit 10d. The estimation result may be a three-dimensional or two-dimensional graph or numerical value data.

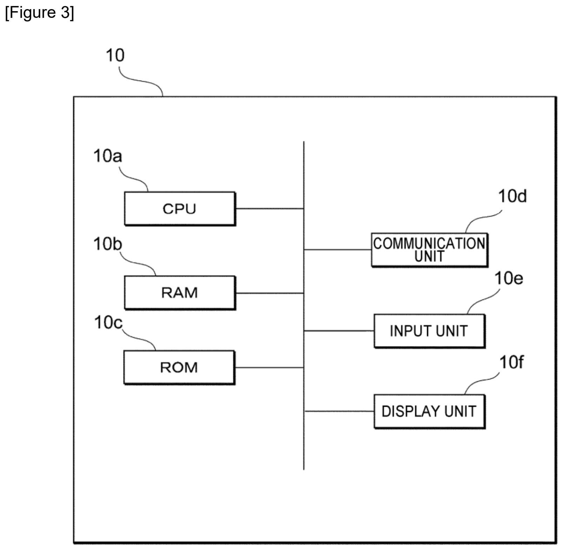

Figure 3 is a diagram illustrating a physical configuration of the road surface shape estimation device 10. The road surface shape estimation device 10 includes the CPU (Central Processing Unit) 10a corresponding to a processor, the RAM (Random Access Memory) 10b and the ROM (Read only Memory) 10c each corresponding to a storage unit, the communication unit 10d, the input unit 10e, and the display unit 10f. These configurations are connected via a bus to be capable of transmitting and receiving data to and from each other. Note that, in the present example, a description will be given of a case where the road surface shape estimation device 10 is configured to include one computer, but the road surface shape estimation device 10 may also be implemented by a combination of a plurality of computers. The configurations illustrated in Figure 3 are an example, and the road surface shape estimation device 10 may also have a configuration other than these or may not necessarily include all of these configurations.

The CPU 10a is a control unit that performs control and an arithmetic operation and processing of data each related to execution of the program stored in the RAM 10b or the ROM 10c. The CPU 10a is an arithmetic operation unit that executes a program (road surface shape estimation program) of estimating the shape of the road surface on the basis of the images acquired by the imaging unit 20. The CPU 10a receives various data from the input unit 10e and the communication unit 10d, and displays and stores a result of the arithmetic operation of the data on the display unit 10f and in the RAM 10b or the ROM 10c.

The RAM 10b is the storage unit in which data can be rewritten, and may be configured to include, e.g., a semiconductor storage element. The RAM 10b may store the road surface shape estimation program to be executed by the CPU 10a. Note that these are examples, and data other than these may also be stored in the RAM 10b.

The ROM 10c is the storage unit from which data can be read, and may be configured to include, e.g., a semiconductor storage element. The ROM 10c may store, e.g., an image editing program or data that is not rewritten.

The communication unit 10d is an interface connecting the road surface shape estimation device 10 to another device. The communication unit 10d may be connected to the communication network N such as the Internet.

The input unit 10e receives an input of data from the user, and may include, e.g., a keyboard and a touch panel.

The display unit 10f visually displays the result of the arithmetic operation by the CPU 10a, and may be configured to include, e.g., a LCD (Liquid Crystal Display). The display unit 10f may display a graph representing the estimated road surface shape.

The road surface shape estimation program may be provided by being stored on a storage medium readable by the computer, such as the RAM 10b or the ROM 10c, or may also be provided via a communication network connected via the communication unit 10d. In the road surface shape estimation device 10, the CPU 10a executes the road surface shape estimation program to implement operations of the acquisition unit 11, the conversion unit 12, the identification unit 13, and the estimation unit 14 each described with reference to Figure 2. Note that these physical configurations are examples, and need not necessarily be independent configurations. For example, the road surface shape estimation device 10 may also include an LSI (Large-Scale Integration) in which the CPU 10a, the RAM 10b, and/or the ROM 10c are integrated.

(Processing Flow)

<Overview>

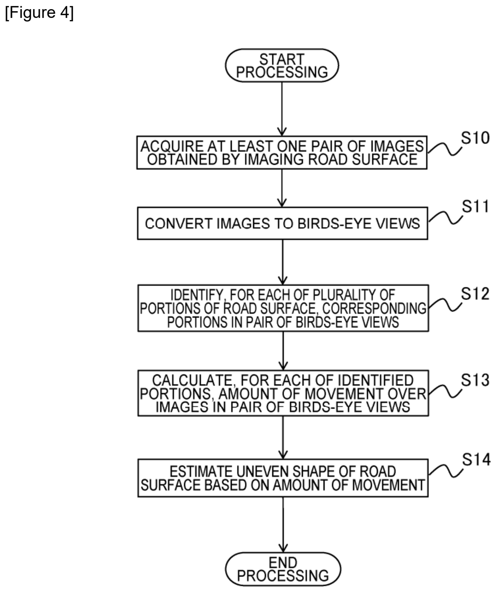

Figure 4 is a flow chart of processing in the road surface shape estimation system 1 in the present embodiment. First, in the road surface shape estimation system 1, the imaging unit 20 acquires the first image of the road surface captured from the first position and the second image of the road surface captured from the second position. The imaging unit 20 transmits the first image and the second image each described above to the road surface shape estimation device 10 (S10). It is to be noted herein that the imaging unit 20 may further acquire another one or plurality of images and transmit the image or images to the road surface shape estimation device 10.

Then, the road surface shape estimation device 10 that has acquired the first image and the second image converts the first image and the second image to the birds-eye views in the conversion unit 12 (S11). The conversion unit 12 performs the birds-eye view conversion according to, e.g., the following expressions. The following expressions are expressions for converting the images acquired by the imaging unit 20 diagonally from above the road surface to images acquired from a virtual camera disposed directly above the road surface.

[Math. 1]

$$x' = \frac{f'}{H_{VC}} \cdot \frac{H_C x}{f\sin\theta - y\cos\theta}$$

$$(1)$$

$$y' = \frac{f'}{H_{vc}} \cdot \left\{ \frac{H_c(f\cos\theta + y\sin\theta)}{f\sin\theta - y\cos\theta} - D_{vc} \right\}$$

$$(2)$$

Here, x and y are pixel positions in the pre-conversion images, while x' and y' are pixel positions in the post-conversion images. Meanwhile, f and f' are respective focal lengths of the imaging unit 20 and the virtual camera in pixel equivalent, $\theta$ is an angle formed between the imaging unit 20 and the road surface, $H_{VC}$ is a height of the virtual camera from the road surface, $D_{VC}$ is a parallel distance between the imaging unit 20 and the virtual camera, and Hc is a height of the imaging unit 20 from the road surface. By adjusting various parameters in the virtual camera, it is possible to calibrate the birds-eye views. More specifically, S. Tanaka et al., International Journal of Vehicular Technology, Volume 2011, Article ID 279739 (2011) can be referenced.

In the conversion unit 12, various parameters in the virtual camera can be set by the user of the road surface shape estimation device 10, or may also be set by a manufacturer of the road surface shape estimation device 10. Alternatively, the road surface shape estimation device 10 can also automatically set the various parameters in the virtual camera according to an algorithm designed so as to increase the accuracy of the road surface shape estimation, while adjusting the various parameters in the virtual camera. Still alternatively, the various parameters may also be adjusted manually or automatically such that portions of the road surface having known shapes, such as a lane and a manhole, have the known shapes in the post-conversion birds-eye views.

Figure 5 is a diagram illustrating an example of the pair of images acquired in Step S10 and subjected to the conversion in Step S11 in the road surface shape estimation system 1 in the present embodiment. Figures 5(a) and 5(b) illustrate the images acquired by the imaging unit disposed in the running vehicle. Figure 5(a) illustrates the image of the road surface captured from the first position, while Figure 5(b) illustrates the image captured from the second position several meters forward from the first position in an imaging direction. Figures 5(c) and 5(d) illustrate the pair of birds-eye views obtained by subjecting the respective images in Figures 5(a) and 5(b) to the birds-eye view conversion. In Figures 5(c) and 5(d), regions S enclosed in rectangles are the overlapping regions in the first birds-eye view and the second birds-eye view, and the road surface shape estimation device 10 can estimate the road surface shape in each of the regions S.

Returning to Figure 4, subsequently to Step S11, the identification unit 13 of the road surface shape estimation device 10 compares the pair of birds-eye views resulting from the conversion by the conversion unit 12 with each other and identifies, for each of the plurality of portions of the road surface, the first portion in the first birds-eye view and the second portion in the second birds-eye view that correspond to the portion (S12). A description is given herein by using an example in which the user specifies a feature portion on the road surface, such as the lane, manhole, or shadow, and the identification unit 13 identifies a position of the feature portion.

In Step S12, the identification unit 13 identifies pixels in the first and second birds-eye views corresponding to the feature portion on the road surface specified by the user and positions thereof on the images. The identification unit 13 identifies, for each of the pixels in the feature portion specified in the first birds-eye view, a corresponding pixel in the feature portion specified in the second birds-eye view. The corresponding pixel may be a pixel occupying the same position on the image in a predetermined direction, and may also be a feature point in the feature portion described above.

In the example of the pair of images illustrated in Figure 5, for instance, the user may specify a shadow P of a linear structure included in each of the regions S in Figures 5(c) and 5(d) as the corresponding portion. After the user specified the shadow P of the linear structure as the corresponding portion, the identification unit 13 identifies pixels corresponding to the shadow and positions thereof on the images. Figure 5(e) is a diagram illustrating positions of the shadows P of the linear structures on the images in Figures 5(c) and 5(d) in a vertical direction (y-direction) and a lateral direction (x-direction) of the images. For example, the identification unit 13 may associate, with each of the pixels in the shadow P of the linear structure in the first birds-eye view, the pixel in the shadow P of the linear structure having the same x-coordinate value in the second birds-eye view. Alternatively, it may also be possible to associate, with a pixel corresponding to each of the feature points (such as, e.g., a local maximum point or a local minimum point in xy-coordinates) in the shadow P of the linear structure in the first birds-eye view, a pixel corresponding to the corresponding feature point in the shadow P of the linear structure in the second birds-eye view.

Returning to Figure 4, subsequently to Step S12, the estimation unit 14 of the road surface shape estimation device 10 calculates, for each of the corresponding portions (each of the first portion and the second portion) in the first and second birds-eye views identified by the identification unit 13, an amount of movement from the first portion to the second portion over the images (S13). The amount of movement is an amount of movement in pixel equivalent of the images. For example, the amount of movement may be determined by, e.g., calculating differences between coordinates of the first portion in the first birds-eye view in pixel equivalent and coordinates of the second portion in the second birds-eye view in pixel equivalent.

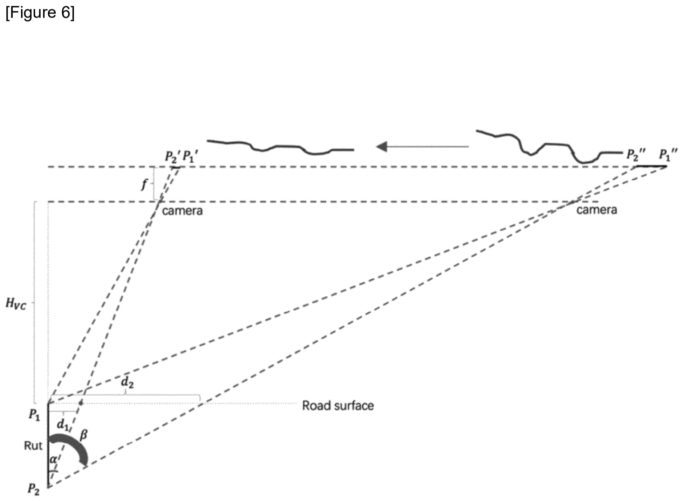

Then, the estimation unit 14 of the road surface shape estimation device 10 estimates the uneven shape of the road surface on the basis of the above amount of movement between the individual portions calculated in Step S13 (S14). It is to be noted herein that, when a pinhole camera model illustrated in Figure 6 is assumed, between a length in each of the birds-eye views and a depth of the road surface, a relationship given by the following expression is established. In the following expression, P' ($P_1'$, $P_2'$) and P" ($P_1''$, $P_2''$) are positions on the images at the corresponding points in the second birds-eye view and the first birds-eye view, f and Hvc are synonymous to those in the above expressions (1) and (2), $l_{P1P2}$ is a depth from the road surface, and each of $d_1$, $d_2$, $\alpha$, and $\beta$ is a length or an angle defined in Figure 6.
[Math. 2]

$$l_{P_1''P_2''} - l_{P_1'P_2'} = \frac{f}{H_{VC}}(d_2 - d_1)$$

$$= \frac{f}{H_{VC}}\left(l_{P_1P_2} \tan\beta - l_{P_1P_2} \tan\alpha\right)$$

$$= \frac{fl_{P_1P_2}}{H_{VC}}\left(\tan\beta - \tan\alpha\right)$$

$$(3)$$

Accordingly, in Step S14, the estimation unit 14 may estimate relative coordinates in a depth direction in pixel equivalent of each of the portions for which the corresponding portions have been identified in the first and second birds-eye view according to the following expressions. In the following expressions, $\Delta y$ is a component (i.e., component in a direction extending from the first position to the second position) of the amount of movement calculated in Step S13 which is parallel to the running direction of the vehicle, and the other variables are synonymous to those in expression (3) shown above. Accordingly, the estimation unit 14 can estimate the depth of the road surface on the basis of an angle at which the imaging unit 20 images the road surface at the first position from which the first image is acquired, an angle at which the imaging unit 20 images the road surface at the second position from which the second image is acquired, the focal length of the imaging unit 20, the pre-set height of the virtual camera from the road surface, and the amount of movement calculated in Step S13. Alternatively, the estimation unit 14 may also estimate the depth of the road surface by performing calibration using a value represented by an expression (4-A), which is a coefficient of $\Delta y$, as a variable. An example of a specific calibration method will be described later in the section

<Estimation of Actual Dimension of Uneven Shape>.

[Math. 3]

$$l_{P_1 P_2} = \frac{H_{VC}}{f(\tan\beta - \tan\alpha)}\left(l_{P_1'' P_2''} - l_{P_1' P_2'}\right)$$
$$= \frac{H_{VC}}{f(\tan\beta - \tan\alpha)}\Delta y \qquad (4)$$

[Math. 4]

$$\frac{H_{VC}}{f(\tan\beta - \tan\alpha)} \qquad (4-A)$$

It can be understood that, by being based on the above expression (4), the estimation unit 14 can estimate, for each of the points identified by the identification unit 13, the relative coordinates in the depth direction in pixel equivalent and/or the depth of the road surface. In the example illustrated in Figure 5, the estimation unit 14 can estimate the uneven shape of the road surface in the portion in which the shadow P of the linear structure included in the region S is located. In a case where the identification unit 13 identifies, for each of the plurality of portions or points in the predetermined range of the road surface, a correspondence between the portion or point in the first birds-eye view and the portion or point in the second birds-eye view, it is possible to estimate the three-dimensional shape in the range.

<Estimation of Actual Dimension of Uneven Shape>

By the foregoing processing flow, the road surface shape estimation system 1 in the present embodiment can estimate the uneven shape of the road surface, but the road surface shape estimation system 1 may also further estimate an actual dimension of the estimated uneven shape by using an estimation result for the road surface or object having an uneven shape with a known dimension as reference data. In other words, the road surface shape estimation system 1 may also calibrate a value represented by the above expression (4-A) by using the estimation result for the road surface or object having the uneven shape with the known dimension as the reference data.

The reference data may be acquired by, e.g., disposing the object with the known dimension (e.g., a flat plate with a known thickness) on the road surface and applying the estimation described above with reference to Figure 4 to the object. Thus, it is possible to associate a length in pixel equivalent obtained as the estimation result with a length as an actual value. Alternatively, it may also be possible to use an estimation result obtained according to an existing road surface shape estimation method, such as SfM, as the reference data.

<Processing in Identification Unit>

In Step S12 of the processing flow described above, the identification unit 13 may also be implemented by an algorithm programmed so as to identify the corresponding portions in the pair of images. For example, the identification unit 13 may match the first birds-eye view and the second birds-eye view with each other to thereby identify, for each of the plurality of portions of the road surface, the first portion in the first birds-eye view and the second portion in the second birds-eye view that correspond to the portion. The matching can be carried out according to an appropriate algorithm related to image processing.

In the matching, the identification unit 13 may match the feature points in the first and second birds-eye views with each other, or may also match all pixels included in at least a portion of a region in each of the first and second birds-eye views with each other. Examples of a method of matching the feature points in the first and second birds-eye views with each other may include a method including feature point detection, calculation of feature descriptors, and matching of the feature points or a method of performing end-to-end matching using machine learning.

Examples of an algorithm including the feature point detection, the calculation of the feature descriptors, and the matching of the feature points include SIFT (Scale-Invariant Feature Transform), SURF (Speeded Up Robust Features), ORB (Oriented FAST and Rotated BRIEF), and Harris features. Examples of an algorithm that performs the end-to-end matching using machine learning include a LoFTR (Local Feature TRansformer), GMflow, ml-aspanformer, and the like.

Examples of the method of matching all the pixels included in at least a portion of a region in each of the first and second birds-eye views include matching based on an optical flow. Examples of an algorithm based on the optical flow include a Lucas-Kanad method, a Horn-Schunck method, and a Farneback method. As an algorithm for the matching performed by the identification unit 13, the LoFTR is preferred.

It may also be possible that, before or after the matching in the identification unit 13, feature points to be detected are increased or pre-processing or post-processing for increasing accuracy of the matching is performed. As the processing, adjustment of a brightness and a contrast of each of the images, trimming of the image, removal of a mismatch, or the like can be listed. Examples of the image trimming include trimming of only a range in which the identification of the corresponding portions in the first birds-eye view and the second birds-eye view is intended. As the removal of the mismatch, removal of a feature point at which a predetermined component of the amount of movement is not less than a threshold when the estimation unit 14 calculates the amount of movement between the first portion and the second portion after the matching by the identification unit 13 can be listed.

The identification unit 13 may also divide the pair of birds-eye views into a plurality of regions each having a predetermined specified size and perform the matching of each of the regions without performing the matching of the pair of birds-eye views at a time. Additionally, by setting the regions such that the regions and regions adjacent thereto overlap each other, it is possible to perform matching of a larger number of feature points even for portions in the vicinity of boundaries of the individual regions.

Alternatively, in order to identify the other first and second portions in addition to the first and second portions identified by matching the first birds-eye view and the second birds-eye view with each other, the identification unit 13 may also match first and second conversion diagrams obtained by subjecting the first and second birds-eye views to homography conversion. By thus matching the first and second conversion diagrams obtained by subjecting the first and second birds-eye views to the homography conversion with each other, it is possible to match features points that are not matched prior to the conversion, and identify larger numbers of the first and second portions. Examples of such homography conversion include enlargement, reduction, movement, rotation, skew, and the like.

When the matching is to be carried out by a machine learning model such as the LoFTR in the identification unit 13, by causing training data to include at least one of a combination of an image of the road surface and an unclear image corresponding thereto and a combination of two images having respective regions overlapping each other in which respective all pixels are associated with each other, it is possible to identify larger numbers of the first and second portions.

Since the training data includes the combination of the image of the road surface and the unclear image corresponding thereto, even when motion blur (blur) has occurred in the images acquired by the imaging unit 20, it is possible to accurately identify the first and second portions. Such training data may appropriately be obtained by preparing the combination of the (clear) image of the road surface and the image obtained by intentionally adding, to the image, blur (at least one of the motion blur, defocus blur, and Gaussian blur). The combination of the image of the road surface and the unclear image corresponding thereto may be a combination of the image of the road surface and an image including a portion obtained by adding blur to at least one portion of the image of the road surface, or may be a combination of the image of the road surface and an image including a portion of an image obtained by adding the blur to the image of the road surface and a portion of an image adjacent to the portion. The image including the portion of the image obtained by adding the blur to the image of the road surface and the portion of the image adjacent to the portion may appropriately be generated by intentionally adding the blur to the image of the road surface and then moving a viewing field region of the image.

Since the training data includes the combination of the two images having the respective regions overlapping each other in which the respective all pixels are associated with each other, it is possible to further increase the accuracy of the matching of the feature points in the identification unit 13. Such training data may appropriately be obtained by first performing feature point matching on the pair of birds-eye views including the overlapping regions to thereby match a plurality of feature points with each other and projectively transforming these feature points and other images to cause the pair of birds-eye views to overlap each other and thereby match overlapping points that have not been matched yet with each other as corresponding points. To reliably perform the projective transformation in such a method, the number of the plurality of feature points to be matched by the feature point matching is preferably 4 or more.

<Estimation of Rutting Shape>

In the road surface shape estimation system 1 in the present embodiment, when the portion for which the identification unit 13 has identified the first and second portions includes a plurality of portions having different positions in a direction of the road surface (transverse direction of the road surface) substantially perpendicular to the running direction of the vehicle, it is possible to estimate a rutting shape on the road surface.

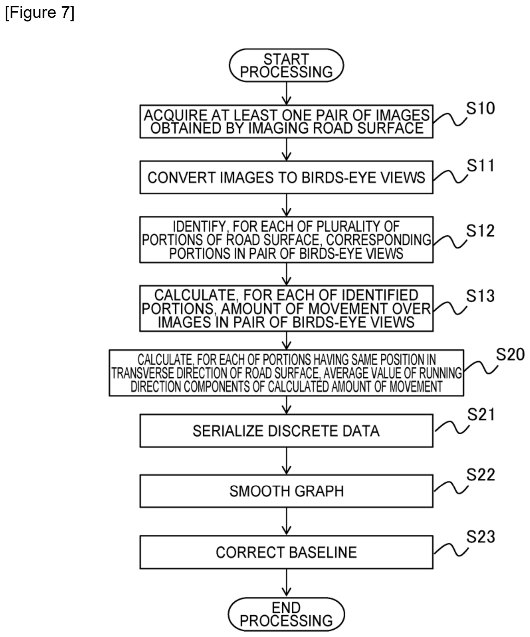

Figure 7 is a flow chart of processing in which the road surface shape estimation system 1 in the present embodiment estimates the rutting shape on the road surface. Steps S10 to S13 may be the same as those in the processing the flow chart of which is illustrated in Figure 4. However, the image acquired in Step S10 is the image captured by the imaging unit 20 disposed in the vehicle 30 running on the road surface. In addition, in Step S12, the identification unit 13 preferably matches the first birds-eye view and the second birds-eye view with each other to thereby identify large numbers of the first portions and the second portions in the overlapping regions in the pair of images.

A description will be given hereinbelow on the assumption that the transverse direction of the road surface is an x-axis and the vehicle running direction of the road surface is a y-axis.

Figure 8 is a graph showing an example of an output when the rutting shape is estimated by the road surface shape estimation system according to the present embodiment. Figure 8(a) is a graph obtained by plotting, for each of a plurality of points which are included in a predetermined region having a width of 480 pixels in the y-axis direction and for which the first portions and the second portions have been identified, an x-coordinate on the image (position in the transverse direction of the road surface) and a y-axis-direction component $\Delta y$ of the amount of movement from the first portion to the second portion.

In the estimation of the rutting shape, it is assumed that the rutting shape is constant in a predetermined range in the y-axis direction, and, as shown in Figure 8(a), the plurality of points which are included in the predetermined range of the first or second image in the y-axis direction and for which the first portions and the second portions have been identified are used for the estimation. In Step S20, for the plurality of points which are included in the predetermined range of the first or second image in the y-axis direction and for which the first portions and the second portions have been identified, an average value of running direction components of the amounts of movement calculated in Step S13 is calculated for individual portions having the same position in the transverse direction of the road surface (S20). In the example illustrated in Figure 8, for individual points having the same x-coordinate illustrated in Figure 8(a), an average value of $\Delta y$ is calculated to allow the graph illustrated in Figure 8(b) to be obtained.

Since discrete data can be obtained in Step S20, then, serialization and smoothing of the discrete data is performed (S21, S22). The smoothing may appropriately be performed by calculating a moving average. In the example illustrated in Figure 8, by performing the serialization and the smoothing, the respective graphs illustrated in Figures 8(c) and 8(d) are obtained.

Ideally, at both ends of the road surface, a rutting depth is 0, and therefore a baseline of the graph obtained in Step S22 is then corrected to set the rutting depth at each of the both ends of the road surface to 0 (S23). A line segment connecting both ends of the graph obtained in Step S22 is assumed to be a road surface with no rutting, and a distance between each of points on the graph and the line segment is estimated to be a rutting depth in pixel equivalent. Such correction can be carried out using the following expression. In the following expression, $d_i$ is a rutting depth (in pixel equivalent) at a point i, $x_{pi}$ and $y_{pi}$ are xy-coordinates at the point i prior to the conversion, $x_{pl}$ and $y_{pl}$ are xy-coordinates at the leftmost point prior to the conversion, $x_{pr}$ and $y_{pr}$ are xy-coordinates at the rightmost point prior to the conversion, and respective arithmetic operations in a numerator and a denominator are a determinant and a norm of a matrix.

[Math. 5]

$$d_i = \frac{\begin{vmatrix} x_{p_r} - x_{p_l} & y_{p_r} - y_{p_l} \\ x_{p_i} - x_{p_l} & y_{p_i} - y_{p_l} \end{vmatrix}}{\left\| \begin{matrix} x_{p_r} - x_{p_l} & y_{p_r} - y_{p_l} \end{matrix} \right\|} \qquad (5)$$

In the example illustrated in Figure 8, by correcting the baseline, the graph illustrated in Figure 8(e) is obtained as the rutting shape in a region including each of the portions illustrated in Figure 8(a). As described in detail in <Estimation of Actual Dimension of Uneven Shape>, it may also be possible to further estimate an actual depth of the rutting by using the estimation result for the road surface or object having the uneven shape with the known dimension as the reference data.

Note that, in the above processing flow, any of Steps S21 to S23 may be omitted or another new step may be added thereto.

<Estimation of Three-Dimensional Shape>

In the estimation of the rutting shape, the plurality of points which are included in the predetermined range in the running direction of the vehicle and for which the first portions and the second portions have been identified are used for the estimation and, by dividing the range into a plurality of ranges and performing the estimation a plurality of times, a three-dimensional shape of the region can accurately be estimated. In other words, in the estimation of the three-dimensional shape, by dividing a region where the estimation is to be performed into a plurality of regions, estimating a cross-sectional shape of the road surface described with reference to Figure 7 for each of the regions, and recombining the estimation results, the accuracy of the estimation can be increased. A direction in which the region is to be divided is not particularly limited, and the direction may be the direction extending from the first position to the second position or a direction substantially perpendicular to the direction.

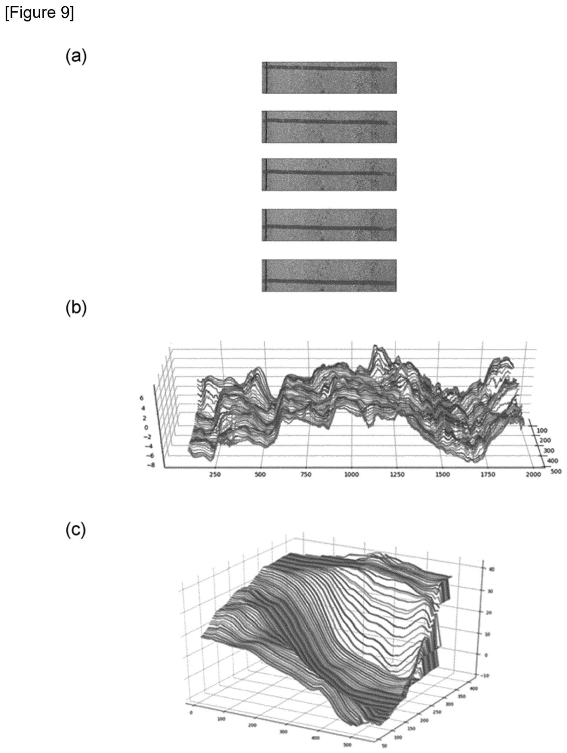

Figure 9 is a diagram illustrating the estimation of the three-dimensional shape performed by the road surface shape estimation system 1. By dividing the region where the three-dimensional shape is to be estimated into the plurality of regions as in Figure 9(a), estimating the cross-sectional shape of the road surface described for each of the regions with reference to Figure 7, and recombining the estimation results, the three-dimensional shape of the road surface can accurately be estimated, as illustrated in Figure 9(b). Additionally, according to the method, a shape of a pothole in the road surface can also be estimated, as illustrated in Figure 9(c).

The embodiment described heretofore is intended to facilitate understanding of the present invention, and should not be construed to limit the present invention. Individual elements included in the embodiment, as well as an arrangement, materials, conditions, shapes, sizes, and the like thereof, are not limited to those shown in the examples, and can be changed as appropriate. In addition, it is possible to partially replace or combine configurations shown in different embodiments.

[Additional Notes]

The present invention includes the following embodiments.

[1] A road surface shape estimation device including:

an identification unit that compares a first birds-eye view obtained by converting a first image of a road surface, captured from a first position, into a birds-eye view with a second birds-eye view obtained by converting a second image of the road surface, captured from a second position different from the first position, into a birds-eye view and identifies, for each of a plurality of portions of the road surface, a first portion in the first birds-eye view corresponding to the portion and a second portion in the second birds-eye view corresponding to the portion; and

an estimation unit that calculates an amount of movement between the first portion and the second portion over the images and estimates an uneven shape of the road surface on the basis of the amount of movement.

[2] The road surface shape estimation device according to [1], wherein the identification unit matches the first birds-eye view with the second birds-eye view to identify the first and second portions.
[3] The road surface shape estimation device according to [2], wherein the identification unit matches respective feature points in the first and second birds-eye views or matches all pixels, included in at least a portion of a region of each of the first and second birds-eye views, to perform the identification.
[4] The road surface shape estimation device according to [2] or [3], wherein the identification unit performs the matching for each of a plurality of regions each having a predetermined size in each of the first and second birds-eye views, the plurality of regions having at least respective portions overlapping adjacent regions.
[5] The road surface shape estimation device according to any one of [2] to [4], wherein the identification unit further matches first and second conversion diagrams obtained by subjecting the first and second birds-eye views to homographic conversion to identify the first and second portions.
[6] The road surface shape estimation device according to any one of [2] to [5], wherein

the identification unit uses a supervised learning model to perform the matching and

training data for the learning model includes at least one of a combination of an image of the road surface and a degraded image corresponding thereto and a combination of two images having respective regions overlapping each other in which respective all pixels are associated with each other.

[7] The road surface shape estimation device according to [6], wherein the combination of the image of the road surface and the degraded image corresponding thereto is a combination of the image of the road surface and an image including a portion obtained by adding blur to at least one portion of the image of the road surface.
[8] The road surface shape estimation device according to [6], wherein the combination of the two images having the respective regions overlapping each other in which the respective all pixels are associated with each other is a combination of two images generated by a method including matching feature points in a pair of images including respective overlapping regions so as to match a plurality of feature points, projectively transforming at least one of the pair of images such that at least some of the plurality of feature points overlap each other in the pair of images, and correspondingly associating, in the overlapping regions of the pair of images, at least one of which has been projectively transformed, pixels overlapping with each other among pixels other than the plurality of matched feature points.

[9] The road surface shape estimation device according to any one of [1] to [8], wherein

each of the first and second images is an image or a frame of a video captured by an imaging unit disposed in a vehicle running on the road surface,

the identification unit identifies the first and second portions, for each of the plurality of portions of the road surface having different positions at least in a direction substantially perpendicular to a running direction of the vehicle, and

the estimation unit estimates an uneven shape in the direction substantially perpendicular to the running direction of the vehicle.

[10] The road surface shape estimation device according to [9], wherein

the identification unit further identifies the first and second portions, for each of the plurality of portions of the road surface having the same position in the direction substantially perpendicular to the running direction of the vehicle, and

the estimation unit further calculates, for the plurality of portions of the road surface having the same position in the direction substantially perpendicular to the running direction of the vehicle, an average value of component in the running direction of the calculated amounts of movement.

[11] The road surface shape estimation device according to any one of [1] to [10], wherein the uneven shape includes at least one of a rutting and a pothole.

[12] The road surface shape estimation device according to any one of [1] to [11], wherein the estimation unit uses an estimation result for a road surface or an object having an uneven shape of a known dimension as reference data to further calculate a dimension of the estimated uneven shape on the road surface.

[13] A road surface shape estimation method including:

comparing a first birds-eye view obtained by converting a first image of a road surface, captured from a first position, into a birds-eye view with a second birds-eye view obtained by converting a second image of the road surface, captured from a second position different from the first position, into a birds-eye view and identifying, for each of a plurality of portions of the road surface, a first portion in the first birds-eye view corresponding to the portion and a second portion in the second birds-eye view corresponding to the portion; and

calculating an amount of movement between the first portion and the second portion over the images and estimating an uneven shape of the road surface on the basis of the amount of movement.

[14] A road surface shape estimation system including:

an imaging unit disposed in a vehicle;

an identification unit that compares a first birds-eye view obtained by converting a first image of a road surface, captured by the imaging unit from a first position, into a birds-eye view with a second birds-eye view obtained by converting a second image of the road surface, captured by the imaging unit from a second position different from the first position, into a birds-eye view and identifies, for each of a plurality of portions of the road surface, a first portion in the first birds-eye view corresponding to the portion and a second portion in the second birds-eye view corresponding to the portion; and

an estimation unit that calculates an amount of movement between the first portion and the second portion over the images and estimates an uneven shape of the road surface on the basis of the amount of movement.

[15] A road surface shape estimation program for causing a computer to function as:

an identification unit that compares a first birds-eye view obtained by converting a first image of a road surface, captured from a first position, into a birds-eye view with a second birds-eye view obtained by converting a second image of the road surface. captured from a second position different from the first position, into a birds-eye view and identifies, for each of a plurality of portions of the road surface, a first portion in the first birds-eye view corresponding to the portion and a second portion in the second birds-eye view corresponding to the portion; and

an estimation unit that calculates an amount of movement between the first portion and the second portion over the images and estimates an uneven shape of the road surface on the basis of the amount of movement.

[15-1] A computer readable recording medium on which the program in [15] is recorded. The recording medium may be a non-transitory tangible medium such as a CD-ROM, an SD card, or a USB memory.

**Reference Signs** List

| 1 | Road surface shape estimation system |
|---|---|
| 10 | Road surface shape estimation device |
| 10a | CPU |
| 10b | RAM |
| 10c | ROM |
| 10d | Communication unit |
| 10e | Input unit |
| 10f | Display unit |
| 11 | Acquisition unit |
| 12 | Conversion unit |
| 13 | Identification unit |
| 14 | Estimation unit |
| 20 | Imaging unit |
| 30 | Vehicle |
| N | Communication network |
| S | Region |

**Claims**

1. A road surface shape estimation device comprising:

   an identification unit that compares a first birds-eye view obtained by converting a first image of a road surface, captured from a first position, into a birds-eye view with a second birds-eye view obtained by converting a second image of the road surface, captured from a second position different from the first position, into a birds-eye view and identifies, for each of a plurality of portions of the road surface, a first portion in the first birds-eye view corresponding to the portion and a second portion in the second birds-eye view corresponding to the portion; and
   an estimation unit that calculates an amount of movement between the first portion and the second portion over the images and estimates an uneven shape of the road surface on the basis of the amount of movement.

2. The road surface shape estimation device according to claim 1, wherein the identification unit matches the first birds-eye view with the second birds-eye view to identify the first and second portions.

3. The road surface shape estimation device according to claim 2, wherein the identification unit matches respective feature points in the first and second birds-eye views or matches all pixels included in at least a portion of a region of each of the first and second birds-eye views, to perform the identification.

4. The road surface shape estimation device according to claim 2, wherein the identification unit performs the matching for each of a plurality of regions each having a predetermined size in each of the first and second birds-eye views, the plurality of regions having at least respective portions overlapping adjacent regions.

5. The road surface shape estimation device according to claim 2, wherein the identification unit further matches first and second conversion diagrams obtained by subjecting the first and second birds-eye views to homographic conversion to identify the first and second portions.

6. The road surface shape estimation device according to claim 2, wherein

the identification unit uses a supervised learning model to perform the matching and

training data for the learning model comprises at least one of a combination of an image of the road surface and a degraded image corresponding thereto and a combination of two images having respective regions overlapping each other in which respective all pixels are associated with each other.

7. The road surface shape estimation device according to claim 6, wherein the combination of the image of the road surface and the degraded image corresponding thereto is a combination of the image of the road surface and an image including a portion obtained by adding blur to at least one portion of the image of the road surface.

8. The road surface shape estimation device according to claim 6, wherein the combination of the two images having the respective regions overlapping each other in which the respective all pixels are associated with each other is a combination of two images generated by a method comprising matching feature points in a pair of images including respective overlapping regions so as to match a plurality of feature points, projectively transforming at least one of the pair of images such that at least some of the plurality of feature points overlap each other in the pair of images, and correspondingly associating, in the overlapping regions of the pair of images, at least one of which has been projectively transformed, pixels overlapping with each other among pixels other than the plurality of matched feature points.

9. The road surface shape estimation device according to any one of claims 1 to 8, wherein

each of the first and second images is an image or a frame of a video captured by an imaging unit disposed in a vehicle running on the road surface,

the identification unit identifies the first and second portions, for each of the plurality of portions of the road surface having different positions at least in a direction substantially perpendicular to a running direction of the vehicle, and

the estimation unit estimates an uneven shape in the direction substantially perpendicular to the running direction of the vehicle.

10. The road surface shape estimation device according to claim 9, wherein

the identification unit further identifies the first and second portions, for each of the plurality of portions of the road surface having the same position in the direction substantially perpendicular to the running direction of the vehicle, and

the estimation unit further calculates, for the plurality of portions of the road surface having the same position in the direction substantially perpendicular to the running direction of the vehicle, an average value of component in the running direction of the calculated amounts of movement.

11. The road surface shape estimation device according to any one of claims 1 to 8, wherein the uneven shape comprises at least one of a rutting and a pothole.

12. The road surface shape estimation device according to any one of claims 1 to 8, wherein the estimation unit uses an estimation result for a road surface or an object having an uneven shape of a known dimension as reference data to further calculate a dimension of the estimated uneven shape on the road surface.

13. A road surface shape estimation method comprising:

comparing a first birds-eye view obtained by converting a first image of a road surface, captured from a first position, into a birds-eye view with a second birds-eye view obtained by converting a second image of the road surface, captured from a second position different from the first position, into a birds-eye view and identifying, for each of a plurality of portions of the road surface, a first portion in the first birds-eye view corresponding to the portion and a second portion in the second birds-eye view corresponding to the portion; and

calculating an amount of movement between the first portion and the second portion over the images and estimating an uneven shape of the road surface on the basis of the amount of movement.

14. A road surface shape estimation system comprising:

an imaging unit disposed in a vehicle;
an identification unit that compares a first birds-eye view obtained by converting a first image of a road surface, captured by the imaging unit from a first position, into a birds-eye view with a second birds-eye view obtained by converting a second image of the road surface, captured by the imaging unit from a second position different from the first position, into a birds-eye view and identifies, for each of a plurality of portions of the road surface, a first portion in the first birds-eye view corresponding to the portion and a second portion in the second birds-eye view corresponding to the portion; and

an estimation unit that calculates an amount of movement between the first portion and the second portion over the images and estimates an uneven shape of the road surface on the basis of the amount of movement.

15. A road surface shape estimation program for causing a computer to function as:

an identification unit that compares a first birds-eye view obtained by converting a first image of a road surface, captured from a first position, into a birds-eye view with a second birds-eye view obtained by converting a second image of the road surface, captured from a second position different from the first position, into a birds-eye view and identifies, for each of a plurality of portions of the road surface, a first portion in the first birds-eye view corresponding to the portion and a second portion in the second birds-eye view corresponding to the portion; and

an estimation unit that calculates an amount of movement between the first portion and the second portion over the images and estimates an uneven shape of the road surface on the basis of the amount of movement.

[Figure 1]

[Figure 2]

[Figure 3]

[Figure 4]

```
                    ╭─────────────╮
                    │    START    │
                    │ PROCESSING  │
                    ╰─────────────╯
                           │
                           ▼
        ┌──────────────────────────────────────┐
        │ ACQUIRE AT LEAST ONE PAIR OF IMAGES   │⌇ S10
        │  OBTAINED BY IMAGING ROAD SURFACE     │
        └──────────────────────────────────────┘
                           │
                           ▼
        ┌──────────────────────────────────────┐
        │    CONVERT IMAGES TO BIRDS-EYE VIEWS  │⌇ S11
        └──────────────────────────────────────┘
                           │
                           ▼
        ┌──────────────────────────────────────┐
        │      IDENTIFY, FOR EACH OF PLURALITY OF│⌇ S12
        │ PORTIONS OF ROAD SURFACE, CORRESPONDING│
        │   PORTIONS IN PAIR OF BIRDS-EYE VIEWS  │
        └──────────────────────────────────────┘
                           │
                           ▼
        ┌──────────────────────────────────────┐
        │   CALCULATE, FOR EACH OF IDENTIFIED    │⌇ S13
        │ PORTIONS, AMOUNT OF MOVEMENT OVER      │
        │   IMAGES IN PAIR OF BIRDS-EYE VIEWS    │
        └──────────────────────────────────────┘
                           │
                           ▼
        ┌──────────────────────────────────────┐
        │   ESTIMATE UNEVEN SHAPE OF ROAD        │⌇ S14
        │ SURFACE BASED ON AMOUNT OF MOVEMENT    │
        └──────────────────────────────────────┘
                           │
                           ▼
                    ╭─────────────╮
                    │     END     │
                    │ PROCESSING  │
                    ╰─────────────╯
```

[Figure 5]

(a)

(b)

(c)

(d)

S

P

S

(e)

[Figure 6]

[Figure 7]

[Figure 8]

[Figure 9]

(a)

(b)

(c)

## INTERNATIONAL SEARCH REPORT

| International application No. |
|---|
| **PCT/JP2024/001420** |

| **A.** | **CLASSIFICATION OF SUBJECT MATTER** |
|---|---|

*G06T 7/55*(2017.01)i; *G01C 7/02*(2006.01)i; *G06T 7/64*(2017.01)i
FI:    G06T7/55; G01C7/02; G06T7/64

According to International Patent Classification (IPC) or to both national classification and IPC

| **B.** | **FIELDS SEARCHED** |
|---|---|

Minimum documentation searched (classification system followed by classification symbols)

G06T7/55; G01C7/02; G06T7/64

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2010-205040 A (DAIHATSU MOTOR CO., LTD.) 16 September 2010 (2010-09-16) paragraphs [0011]-[0012], [0015]-[0035] | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 February 2024** | **12 March 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
**Information on patent family members**

International application No.

**PCT/JP2024/001420**

| Patent document cited in search report | | Publication date (day/month/year) | Patent family member(s) | Publication date (day/month/year) |
|---|---|---|---|---|
| JP | 2010-205040 A | 16 September 2010 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018185276 A

**Non-patent literature cited in the description**

- **S. TANAKA et al.** *International Journal of Vehicular Technology*, 2011, vol. 2011